# EUROPÄISCHE PATENTSCHRIFT

(11) **EP 2 126 414 B1**
(45) Veröffentlichungstag und Bekanntmachung des Hinweises auf die Patenterteilung: **28.07.2010**
(21) Anmeldenummer: 08714296.4
(22) Anmeldetag: 19.03.2008
(51) Int. Cl.: F16H 53/00, F01L 1/08, F02M 59/10, F04B 9/04

(54) **Nocke ZUM ANTREIBEN EINER KOLBENPUMPE**
Cam FOR DRIVING A PISTON PUMP
Came D'ENTRAÎNEMENT POUR UNE POMPE À PISTON

(30) Priorität: 26.03.2007 AT 4672007
(43) Veröffentlichungstag der Anmeldung: 02.12.2009
(73) Patentinhaber: Robert Bosch GmbH, 70469 Stuttgart-Feuerbach (DE)
(72) Erfinder: BERNHAUPT, Martin, A-5411 Oberalm (AT)
(74) Vertreter: Haffner und Keschmann Patentanwälte OG
(86) Internationale Anmeldenummer: PCT/AT2008/000099
(87) Internationale Veröffentlichungsnummer: WO 2008/116241

(56) Entgegenhaltungen:
- WO-A-2005/040558
- DE-A1- 2 329 734
- GB-A- 2 133 467
- US-A- 2 804 863
- US-A- 3 981 281
- US-A- 4 757 795

## Beschreibung

Die Erfindung betrifft eine Vorrichtung zum Antreiben einer Kolbenpumpe, umfassend wenigstens eine auf einer Nockenwelle angeordnete Nocke, die zur Erzeugung einer Hin- und Herbewegung des Pumpenkolbens mit dem Pumpenkolben oder einem zwischen der Nocke und dem Pumpenkolben angeordneten Bauteil zusammenwirkt, wobei die Nocke eine Nockenerhebungskurve mit einem ersten Abschnitt für den Aufwärtshub und einem zweiten Abschnitt für den Abwärtshub aufweist.

Kolbenpumpen kommen beispielsweise als Hochdruckpumpen in Verbrennungskraftmaschinen zum Einsatz. Die Hochdruckpumpe stellt den im Rail zu speichernden Hochdruckkraftstoff während des Motorbetriebs zur Verfügung. Um eine Funktion in allen Betriebspunkten gewährleisten zu können, muss die maximale Fördermenge der Hochdruckpumpe dabei wesentlich über der vom Motor benötigten Volllastmenge liegen. Andererseits ist aber im Teillastbetrieb bzw. im Leerlauf nur eine geringe Fördermenge der Pumpe erforderlich. Daher erfolgt eine elektronische Regelung der Fördermenge über eine Zumesseinheit (ZME), die in Abhängigkeit vom Kraftstoffdruck im Rail die Zuflussmenge zur Hochdruckpumpe bestimmt. So muss nur die im jeweiligen Betriebspunkt tatsächlich benötigte Menge ins Rail eingespeist werden, ohne dass eine anfallende Überschussmenge über ein Druckregelventil wieder entlastet und in den Tank rückgeführt werden muss, was mit hohen Energieverlusten und einer starken Erwärmung des Kraftstoffs verbunden wäre.

Eine Hochdruckpumpe besteht aus mindestens einem Pumpenelement, das über einen Rollenstößel oder direkt von einer Nockenwelle angetrieben wird. Auf der Saugseite liefert eine Förderpumpe, beispielsweise eine Zahnradpumpe, den Kraftstoff mit geringem Druck aus dem Tank. Auf der Druckseite gelangt der komprimierte Kraftstoff über einen Sammler ins Rail.

Eine besondere Herausforderung bei nockenangetriebenen Common-Rail-Hochdruckpumpen besteht in den hohen Pumpendrehzahlen, welche für hohe spezifische Förderleistungen appliziert werden. Die Nockenerhebungen dieser Pumpen werden im Allgemeinen aus verschiedenen Teilbereichen, wie Tangentenerhebungen oder Kreisbögen, mit positivem oder negativem Radius zusammengesetzt. Dadurch ergeben sich vorgegebene Beschleunigungsverläufe, wie linear, sinusförmig oder parabelförmig. Weiters gibt es Nockenerhebungen, die über den gesamten Hubverlauf eine Sinus- (bzw. Kosinus-)form aufweisen.

Verschiedene Nockenerhebungskurven sind aus der EP 244 340 B1, der JP 7133749A, der DE 2329734A1 und der JP 5263727 A bekannt geworden.

Die Anforderungen an die Nockenform bestehen darin, eine möglichst hohe Grenzdrehzahl zu erreichen, sodass sich eine möglichst geringe Verzögerung des Rollenstößels im Bereich des oberen Totpunkts (OT) ergibt, damit keine Gefahr des Abhebens des Rollenstößels besteht, und sodass weiters die kinematische Schwingungsanregung der Pumpenelementfeder gering bleibt. Aus verschiedenen Teilbereichen zusammengesetzte Nockenerhebungen können hohe Grenzdrehzahlen erreichen, allerdings auf Grund von Knicken in der Beschleunigungskurve zu hohen Anregungsfrequenzen für die Pumpenelementfeder führen, da Oberschwingungen hoher Ordnung in der Förderfrequenz auftreten können. Auf der anderen Seite haben sinusförmige Nockenerhebungen den Vorteil einer geringen Schwingungsanregung der Feder (nur Förderfrequenz, keine Oberschwingungen), allerdings bei beschränktem Potential bezüglich der Grenzdrehzahl.

Aus diesem Grund ist das Ziel der vorliegenden Erfindung die Konstruktion einer Nockenerhebungskurve mit geringer kinematischer Schwingungsanregung der Pumpenelementfeder bei gleichzeitiger Erhöhung der Grenzdrehzahl.

Zur Lösung dieser Aufgabe besteht die Erfindung im Wesentlichen darin, dass die Nockenerhebungskurve ausgehend von einer im wesentlichen einer Sinuswelle entsprechenden Form derart verändert ist, dass sich im Vergleich zur Sinuswellen-Form eine Erhöhung der Kolbenbeschleunigung am Anfang des Aufwärtshubes und eine Verringerung der Kolbenverzögerung am Ende des Aufwärtshubes ergibt, wobei die Nockenerhebungskurve über ihren gesamten ersten Abschnitt eine Form aufweist, die sich aus der Überlagerung einer Halbschwingung einer ersten Sinuswelle mit einer zweiten Sinuswelle ergibt, wobei die zweite Sinuswelle die doppelte Frequenz und eine geringere Amplitude aufweist als die erste Sinuswelle. Insbesondere durch die Verringerung der Kolbenverzögerung am Ende des Aufwärtshubes, d.h. durch einen flacheren Verlauf der Nockenerhebungskurve dort, wo der Pumpenkolben den oberen Totpunkt erreicht, wird die Beschleunigungskomponente in Richtung eines Abhebens des Kolbens von der Nocke verringert, sodass die Grenzdrehzahl erhöht werden kann. Gleichzeitig wird das Maß der Schwingungsanregung der Feder gering gehalten, da die Nockenerhebungskurve von einer Sinuswelle ausgehend geformt ist. Um die Erzeugung von unerwünschten Schwingungskomponenten zu vermeiden, ist die Vorrichtung derart gebildet, dass die Nockenerhebungskurve in ihrem ersten Abschnitt eine Form aufweist, die sich aus der Überlagerung einer Halbschwingung einer ersten Sinuswelle mit einer zweiten Sinuswelle ergibt, wobei die zweite Sinuswelle die doppelte Frequenz und eine geringere Amplitude aufweist als die erste Sinuswelle. Bei einer derartigen Überlagerung wird der gewünschte Effekt einer Erhöhung der Kolbenbeschleunigung am Anfang des Aufwärtshubes und einer Verringerung der Kolbenverzögerung am Ende des Aufwärtshubes erreicht und gleichzeitig wird das unkontrollierte Einbringen von Oberschwingungen vermieden, die zu einem Abheben des Pumpenkolbens bereits bei vergleichsweise niedrigen Drehzahlen führen würde.

Die Überlagerung der Sinusschwingung mit einer weiteren Sinusschwingung doppelter Frequenz kann hierbei mit Vorteil über die gesamte Länge der Nockenerhebungskurve erfolgen und es ist in diesem Zusammenhang bevorzugt vorgesehen, dass die Nockenerhebungskurve eine Form aufweist, die sich aus der Überlagerung einer vollen Schwingung einer ersten Sinuswelle mit einer zweiten Sinuswelle ergibt, wobei die zweite Sinuswelle die doppelte Frequenz und eine geringere Amplitude aufweist als die erste Sinuswelle.

Wie bereits erwähnt, soll die Amplitude der zweiten Sinuswelle, d.h. derjenigen Sinuswelle, die für die Überlagerung verwendet wird, geringer sein als die Amplitude der ersten Sinuswelle, d.h. derjenigen Sinuswelle, die die Grundform der Nockenerhebung prägt. In diesem Zusammenhang ist eine Ausbildung bevorzugt, bei welcher die Amplitude der zweiten Sinuswelle 1/5 bis 1/15, vorzugsweise 1/8 bis 1/12, der Amplitude der ersten Sinuswelle beträgt. Dadurch, dass die Amplitude der zweiten Sinuswelle unterhalb einer Amplitude von 1/6 der Amplitude der ersten Sinuswelle gehalten wird, kann das Ausmaß der Einbringung von zusätzlichen Schwingungen innerhalb vertretbarer Grenzen gehalten werden, sodass die Feder nicht in unerwünschter Weise angeregt wird.

Um die Nockenerhebungskurve noch besser zur Erreichung höherer Grenzzahlen anzupassen, ist gemäß einer bevorzugten Ausbildung vorgesehen, dass wenigstens eine weitere Sinuswelle mit der Frequenz einer Harmonischen, insbesondere geradzahliger Ordnung, überlagert ist. Dabei kann beispielsweise zusätzlich zur Überlagerung mit einer Sinuswelle, die die doppelte Frequenz aufweist, die Grundschwingung mit einer weiteren Sinuswelle überlagert werden, die die vierfache Frequenz aufweist wie die Grundschwingung. Harmonische geradzahliger Ordnung eigenen sich hierbei besonders gut, damit die Nockenerhebungskurve keine lokalen Einbuchtungen oder dgl. erhält.

Die Erfindung wird nachfolgend anhand eines in der Zeichnung schematisch dargestellten Ausführungsbeispiels näher erläutert. In dieser zeigt Fig.1 den grundsätzlichen Aufbau eines Pumpenelements nach dem Stand der Technik, Fig.2 die erfindungsgemäße Nockenerhebungskurve und Fig.3 den Verlauf von Hub und Beschleunigung des Pumpenkolbens.

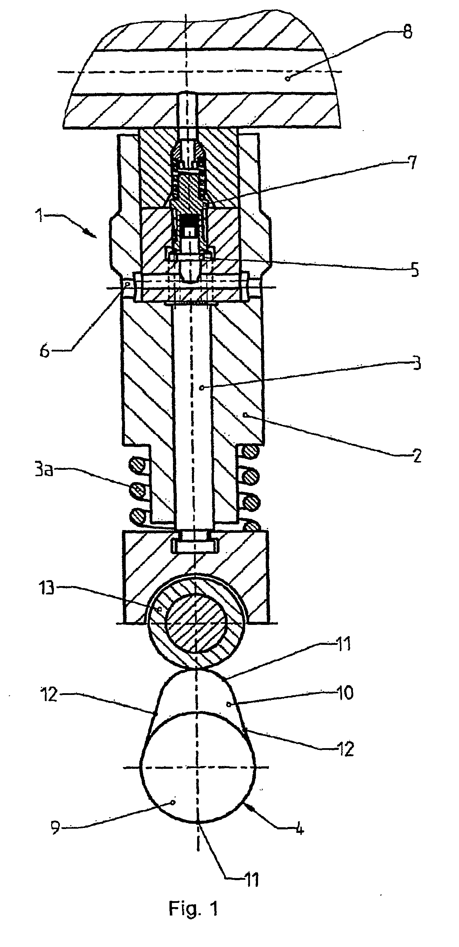

Fig.1 zeigt den grundsätzlichen Aufbau eines Pumpenelements nach dem Stand der Technik. Ein Pumpenelement 1 besteht aus einem Zylinder 2 und einem Kolben 3, der im Zylinder längs verschieblich geführt ist. Eine vom Verbrennungsmotor angetriebene Nockenwelle 4 bewegt den Kolben 3 im Zylinder 2 auf und ab, wobei die Kolbenfeder 3a den Kontakt zwischen dem mit dem Kolben 3 verbundenen Rollenstößel 13 und der Nockenwelle 4 aufrechterhält. Beim Abwärtsgang des Kolbens 3 wird über ein Saugventil 5 Kraftstoff aus dem Pumpensaugraum 6 angesaugt und anschließend beim Aufwärtsgang über ein Druckventil 7 in das Rail 8 gedrückt. Die Nockenwelle 4 besteht dabei aus einem Wellenteil 9 und einem Nocken 10 für jedes anzusteuernde Pumpenelement 1. Der Umriss des Nockens 10, der den Hub des Pumpenelements 1 bestimmt, ist in der Regel aus mehreren kreisförmigen 11 und tangentialen Nockenabschnitten 12 zusammengesetzt. Alternativ kann sich die Form des Nockens auch aus einer Sinusschwingung ergeben.

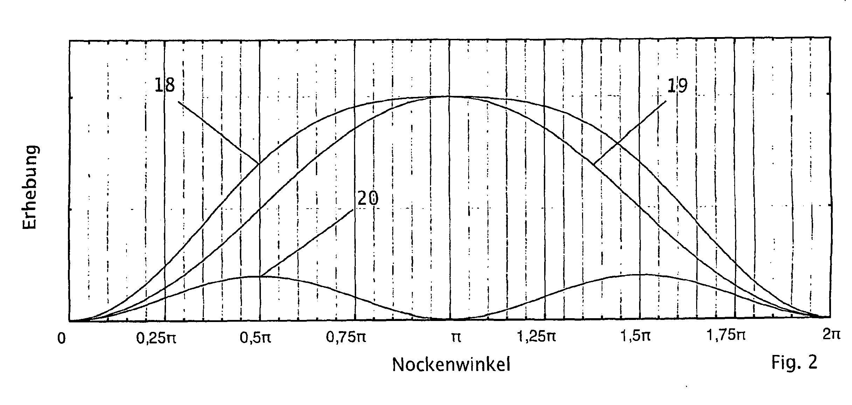

Die erfindungsgemäße Nockenform ist in Fig.2 dargestellt. Dabei ist ersichtlich, dass die Nockenerhebungskurve 18 sich aus der Überlagerung der ersten Sinuswelle 19 mit einer zweiten Sinuswelle 20 ergibt, wobei die zweite Sinuswelle 20 im Vergleich zur ersten Sinuswelle 19 die doppelte Frequenz und eine geringere Amplitude aufweist. Dabei ist anzumerken, dass der Begriff Sinuswelle im Rahmen der vorliegenden Erfindung eine Welle bezeichnet, wie sie in Fig.2 dargestellt ist und einer Kurve entspricht, wie sie sich im streng mathematischen Sinn aus einer Sinusfunktion im Bereich zwischen - 90 und + 270° ergibt. Eine derartige Kurve könnte auch als Kosinusschwingung mit negativem Vorzeichen bezeichnet werden.

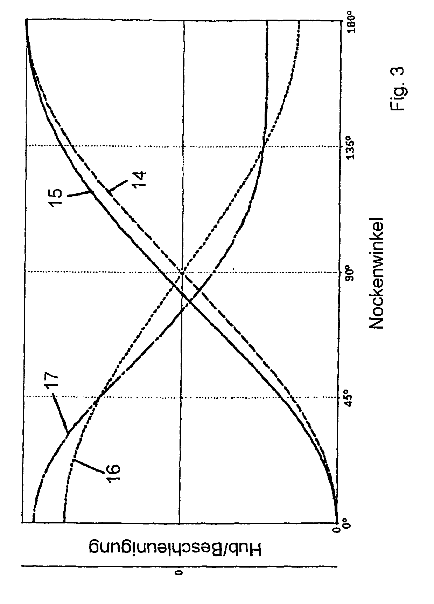

Fig.3 zeigt den Verlauf von Hub 14 und Beschleunigung 16 bei einem sinusförmigen Nocken, sowie Hub- 15 und Beschleunigungsverlauf 17 bei einem erfindungsgemäßen Doppelsinusnocken, wobei auf der X-Achse der Nockenwinkel und auf der Y-Achse der Hub bzw. die Beschleunigung aufgetragen ist. Die Beschleunigung 16 beim Sinusnocken ist zu Förderbeginn (0°) kleiner als die Beschleunigung 17 beim Doppelsinusnocken. Am oberen Totpunkt (180°) ist die Verzögerung 17 des Doppelsinusnockens kleiner als die Verzögerung 16 des Sinusnockens, sodass eine höhere Grenzdrehzahl erreichbar ist. Alternativ besteht die Möglichkeit, noch weitere Oberschwingungen zu überlagern, um damit die Abspringdrehzahl weiter zu erhöhen.

## Patentansprüche

1. Nocke zum Antreiben einer Kolbenpumpe, mit einer Nockenerhebungskurve mit einem ersten Abschnitt für den Aufwärtshub und einem zweiten Abschnitt für den Abwärtshub, **dadurch gekennzeichnet, dass** die Nockenerhebungskurve (15, 18) ausgehend von einer im Wesentlichen einer Sinuswelle (14, 19) entsprechenden Form derart verändert ist, dass sich im Vergleich zur Sinuswellen-Form (14, 19) eine Erhöhung der Kolbenbeschleunigung am Anfang des Aufwärtshubes und eine Verringerung der Kolbenverzögerung am Ende des Aufwärtshubes ergibt, wobei die Nockenerhebungskurve (18) über ihren gesamten ersten Abschnitt eine Form aufweist, die sich aus der Überlagerung einer Halbschwingung einer ersten (19) Sinuswelle mit einer zweiten Sinuswelle (20) ergibt, wobei die zweite Sinuswelle (20) die doppelte Frequenz und eine geringere Amplitude aufweist als die erste Sinuswelle (19).

2. Nocke nach Anspruch 1, **dadurch gekennzeichnet, dass** die Nockenerhebungskurve (18) eine Form aufweist, die sich aus der Überlagerung einer vollen Schwingung einer ersten Sinuswelle (19) mit einer zweiten Sinuswelle (20) ergibt, wobei die zweite Sinuswelle (20) die doppelte Frequenz und eine geringere Amplitude aufweist als die erste Sinuswelle (19).

3. Nocke nach Anspruch 1 oder 2, **dadurch gekennzeichnet, dass** die Amplitude der zweiten Sinuswelle (20) 1/5 bis 1/15, vorzugsweise 1/8 bis 1/12 der Amplitude der ersten Sinuswelle (19) beträgt.

4. Nocke nach einem der Ansprüche 1 bis 3, **dadurch gekennzeichnet, dass** wenigstens eine weitere Sinuswelle mit der Frequenz einer Harmonischen, insbesondere geradzahliger Ordnung, überlagert ist.

5. Vorrichtung zum Antreiben einer Kolbenpumpe, umfassend wenigstens eine auf einer Nockenwelle angeordnete Nocke gemäß Anspruch 1, die zur Erzeugung einer Hin- und Herbewegung des Pumpenkolbens mit dem Pumpenkolben oder einem zwischen der Nocke und dem Pumpenkolben angeordneten Bauteil zusammenwirk.

6. Vorrichtung nach Anspruch 5, **dadurch gekennzeichnet, dass** die Nockenerhebungskurve (18) eine Form aufweist, die sich aus der Überlagerung einer vollen Schwingung einer ersten Sinuswelle (19) mit einer zweiten Sinuswelle (20) ergibt, wobei die zweite Sinuswelle (20) die doppelte Frequenz und eine geringere Amplitude aufweist als die erste Sinuswelle (19).

7. Vorrichtung nach Anspruch 5 oder 6, **dadurch gekennzeichnet, dass** die Amplitude der zweiten Sinuswelle (20) 1/5 bis 1/15, vorzugsweise 1/8 bis 1/12 der Amplitude der ersten Sinuswelle (19) beträgt.

8. Vorrichtung nach einem der Ansprüche 5 bis 7, **dadurch gekennzeichnet, dass** wenigstens eine weitere Sinuswelle mit der Frequenz einer Harmonischen, insbesondere geradzahliger Ordnung, überlagert ist.

9. Vorrichtung nach einem der Ansprüche 5 bis 8, **dadurch gekennzeichnet, dass** der zwischen dem Pumpenkolben (3) und der Nocke (10) angeordnete Bauteil als Rollenstößel (13) ausgebildet ist.

## Claims

1. A cam for driving a piston pump, having a cam elevation curve with a first section for the upward stroke and a second section for the downward stroke, **characterized in that** the cam elevation curve (15, 18), departing from a shape substantially corresponding to that of a sine wave (14, 19), is modified in a manner that, in comparison to the shape of a sine wave (14, 19), an increase in the piston acceleration occurs at the beginning of the upward stroke and a decrease of the piston deceleration occurs at the end of the upward stroke, wherein the cam elevation curve (18) over its whole first section has a shape resulting from the superposition of a semioscillation of a first sine wave (19) with a second sine wave (20), said second sine wave (20) having twice the frequency of, and a lower amplitude than, said first sine wave (19).

2. A cam according to claim 1, **characterized in that** the cam elevation curve (18) has a shape resulting from the superposition of a full oscillation of a first sine wave (19) with a second sine wave (20), said second sine wave (20) having twice the frequency of, and a lower amplitude than, said first sine wave (19).

3. A cam according to claim 1 or 2, **characterized in that** the amplitude of the second sine wave (20) is 1/5 to 1/15, preferably 1/8 to 1/12, of the amplitude of the first sine wave (19).

4. A cam according to any one of claims 1 to 3, **characterized in that** at least one further sine wave with the frequency of a harmonic and, in particular, an even-number harmonic is superposed.

5. A device for driving a piston pump, including at least one cam according to claim 1 mounted on a camshaft and cooperating with the pump piston, or a component arranged between the cam and the pump piston, to generate a reciprocating movement of the pump piston.

6. A device according to claim 5, **characterized in that** the cam elevation curve (18) has a shape resulting from the superposition of a full oscillation of a first sine wave (19) with a second sine wave (20), said second sine wave (20) having twice the frequency of, and a lower amplitude than, said first sine wave (19).

7. A device according to claim 5 or 6, **characterized in that** the amplitude of the second sine wave (20) is 1/5 to 1/15, preferably 1/8 to 1/12, of the amplitude of the first sine wave (19).

8. A device according to any one of claims 5 to 7, **characterized in that** at least one further sine wave with the frequency of a harmonic and, in particular, an even-number harmonic is superposed.

9. A device according to any one of claims 5 to 8, **characterized in that** the component arranged between the pump piston (3) and the cam (10) is designed as a roller tappet (13).

## Revendications

1. Came d'entraînement pour une pompe à piston, comprenant une courbe de levée de came avec une première portion pour la course montante et une deuxième portion pour la course descendante, **caractérisée en ce que**, à partir d'une forme correspondant sensiblement à une onde sinusoïdale (14, 19), la courbe de levée de came (15, 18) est modifiée de façon à obtenir, par rapport à la forme d'onde sinusoïdale (14, 19), une élévation de l'accélération du piston au début de la course montante et une diminution de la décélération du piston à la fin de la course montante, la courbe de levée de came (18) présentant sur toute sa première portion une forme obtenue par superposition d'une demi-période d'une première onde sinusoïdale (19) avec une seconde onde sinusoïdale (20), la seconde onde sinusoïdale (20) présentant une fréquence double et une amplitude inférieure par rapport à la première onde sinusoïdale (19).

2. Came selon la revendication 1, **caractérisée en ce que** la courbe de levée de came (18) présente une forme obtenue par superposition d'une période entière d'une première onde sinusoïdale (19) avec une seconde onde sinusoïdale (20), la seconde onde sinusoïdale (20) présentant une fréquence double et une amplitude inférieure par rapport à la première onde sinusoïdale (19).

3. Came selon la revendication 1 ou 2, **caractérisée en ce que** l'amplitude de la seconde onde sinusoïdale (20) correspond à 1/5 à 1/15, de préférence 1/8 à 1/12, de l'amplitude de la première onde sinusoïdale (19).

4. Came selon une des revendications 1 à 3, **caractérisée en ce qu'**au moins une onde sinusoïdale supplémentaire possédant la fréquence d'une harmonique, en particulier d'ordre pair, est superposée.

5. Dispositif d'entraînement d'une pompe à piston, comprenant au moins une came, selon la revendication 1, qui est disposée sur un arbre à came et qui, pour engendrer un mouvement de va-et-vient du piston de pompe, coopère avec le piston de pompe ou avec un composant disposé entre la came et le piston de pompe.

6. Dispositif selon la revendication 5, **caractérisé en ce que** la courbe de levée de came (18) présente une forme obtenue par superposition d'une période entière d'une première onde sinusoïdale (19) avec une seconde onde sinusoïdale (20), la seconde onde sinusoïdale (20) présentant une fréquence double et une amplitude inférieure par rapport à la première onde sinusoïdale (19).

7. Dispositif selon la revendication 5 ou 6, **caractérisé en ce que** l'amplitude de la seconde onde sinusoïdale (20) correspond à 1/5 à 1/15, de préférence 1/8 à 1/12, de l'amplitude de la première onde sinusoïdale (19).

8. Dispositif selon une des revendications 5 à 7, **caractérisé en ce qu'**au moins une onde sinusoïdale supplémentaire possédant la fréquence d'une harmonique, en particulier d'ordre pair, est superposée.

9. Dispositif selon une des revendications 5 à 8, **caractérisé en ce que** le composant disposé entre le piston de pompe (3) et la came (10) est conformé en poussoir à galet (13).
